# FASCICULE DE BREVET EUROPEEN

(11) **EP 0 504 971 B1**
(45) Date de publication et mention de la délivrance du brevet: **06.09.1995**
(21) Numéro de dépôt: 92200663.0
(22) Date de dépôt: 09.03.1992
(51) Int. Cl.: B29C 33/52, B29C 37/00

(54) **Dispositif de moulage par injection de pièces en matière plastique par la technique des noyaux fusibles**
Vorrichtung zum Spritzgiessen von Kunststoffprodukten mittels schmelzbarer Kerntechnik
Device for injection moulding of plastic products using fusible core technique

(30) Priorité: 18.03.1991 FR 9103370
(43) Date de publication de la demande: 23.09.1992
(73) Titulaire: SOLVAY (Société Anonyme), B-1050 Bruxelles (BE)
(72) Inventeur: Vansnick, Michel, B-1780 Wemmel (BE); De Keyzer, Luc, B-1090 Bruxelles (BE)
(74) Mandataire: Dufrasne, Eugène

(56) Documents cités:
- EP-A- 0 356 643
- EP-A- 0 402 990
- AUTOMOBILTECHNISCHE ZEITSCHRIFT vol. 89, no. 3, 1987, pages 139 - 144; HALDENWANGER, MINEIF, ARNEGGER & SCHULER: 'Kunststoff-Motorbauteile in Ausschmelztechnik am Beispiel eines Saugrohres'
- PLASTVERARBEITER vol. 41, no. 3, Mars 1990, SPEYER DE pages 24 - 28; 'Pkw-Saugrohre aus Kunststoff in Grossserie'
- CAOUTCHOUCS ET PLASTIQUES vol. 67, no. 698, Août 1990, PARIS FR pages 51 - 54; DE KEYZER: 'Noyaux fusibles: de la recherche à l'industrialisation'

## Description

La présente invention concerne un dispositif de moulage par injection de pièces en matière plastiques par la technique des noyaux fusibles.

Il est bien connu actuellement de recourir à la technique de moulage par injection dite des noyaux fusibles pour réaliser des pièces creuses de profil élaboré. Cette technique, qui est notamment décrite dans le brevet FR-A-1 162 096, implique pour le moins quatre étapes successives principales :
- le moulage d'un noyau fusible par injection basse pression d'un métal à bas point de fusion dans un moule métallique ;
- le moulage par injection de la pièce désirée par injection d'une matière plastique en utilisant une presse d'injection classique dont le moule est préalablement garni d'un noyau fusible ;
- l'extraction par fusion et la récupération du métal du noyau fusible emprisonné dans la pièce moulée, après extraction de celle-ci, de son moule d'injection ;
- le lavage de la pièce moulée débarrassée du noyau fusible.

Dans "Kunststoff-Motorbauteile in Ausschmelzkerntechnik am Beispiel eines Saugrohres", Automobiltechnische Zeitschrift, vol. 89, 1987, n° 3, Haldenvanger, Mineif, Arnegger et Schuler décrivent notamment un dispositif de moulage par injection de pièces en matière plastique par la technique des noyaux fusibles comprenant une unité de moulage de noyaux fusibles et une unité de moulage par injection des pièces disposées en parallèle ainsi qu'une unité de fusion et de récupération des noyaux fusibles des pièces moulées et une unité de lavage des pièces moulées disposées à une extrémité des unités de moulage de noyaux fusibles et de moulage par injection des pièces.

Ces opérations successives impliquent, dès lors, une série de transferts soit du noyau fusible ou de la pièce moulée entre ces différentes unités. Compte tenu, en outre, du fait que pour de nombreuses applications le poids du noyau fusible peut varier entre 10 et 50 kg, il apparaît souhaitable de pouvoir automatiser toutes les opérations nécessaires par cycle de moulage.

A cet effet, on peut certes envisager le recours à un robot pour assurer une partie de ces opérations, mais il s'avère qu'un tel moyen ne peut assurer l'ensemble des nombreuses opérations nécessitées lors d'un cycle de moulage - prise et extraction de la pièce moulée, transfert de cette pièce dans l'unité de fusion du noyau fusible puis dans l'unité de lavage, prise et extraction d'un noyau fusible de son unité de moulage, positionnement et abandon de ce noyau fusible dans la presse d'injection - tout en permettant une productivité acceptable. En particulier, en procédant selon cet ordre logique, il apparaît que la presse d'injection est inactive durant le cycle des transferts successifs de la pièce moulée lors du cycle précédent.

La demanderesse a maintenant mis au point un dispositif de moulage par injection de pièces en matière plastique par la technique des noyaux fusibles dont le fonctionnement est automatisé, de façon simple, tout en permettant une grande souplesse de fonctionnement et une productivité remarquable.

La présente invention concerne, dès lors, un dispositif de moulage par injection de pièces en matière plastique par la technique des noyaux fusibles comprenant (a) une unité de moulage de noyaux fusibles et (b) une unité de moulage par injection des pièces disposées en parallèle ainsi que (c) une unité de fusion et de récupération des noyaux fusibles des pièces moulées et (d) une unité de lavage des pièces moulées disposées à une extrémité des unités de moulage de noyaux fusibles et de moulage par injection des pièces caractérisé en ce qu'il est équipé d'une part d'un robot de tranfert mobile disposé entre les unités de moulage de noyaux fusibles et de moulage par injection des pièces, ledit robot de tranfert étant équipé d'un bras rotatif comportant, à une extrémité, une pince adaptée pour saisir et maintenir un noyau fusible moulé et, à l'autre extrémité, une pince adaptée pour saisir et maintenir une pièce moulée, d'autre part d'un robot de fusion fixe disposé entre les unités de moulage de noyaux fusibles et de moulage par injection et à proximité des unités de fusion et de récupération des noyaux fusibles et de lavage des pièces moulées, ledit robot de fusion étant équipé d'une pince adaptée pour saisir et maintenir une pièce moulée, les robots de transfert et de fusion étant programmés de façon telle que, lors du déroulement d'une séquence de moulage, le robot de transfert assure successivement la prise et l'extraction du noyau fusible moulé dans l'unité de moulage de noyaux fusibles par l'intermédiaire de la première pince adaptée, la prise et l'extraction d'une pièce moulée dans l'unité de moulage par injection par l'intermédiaire de la seconde pince adaptée, le placement, par une rotation de son bras, du noyau fusible dans l'unité de moulage par injection et le transfert de la pièce moulée vers le robot de fusion qui assure ensuite l'introduction de la pièce moulée dans l'unité de fusion et de récupération des noyaux fusibles puis l'abandon de cette pièce dans l'unité de lavage.

Dans le dispositif conforme à l'invention, le recours à un robot de transfert comportant un bras rotatif équipé de deux pinces adaptées l'une à la prise d'un noyau fusible et l'autre à la prise d'une pièce moulée permet notamment le positionnement d'un noyau fusible dans la presse d'injection dès que celle-ci est débarrassée de la pièce moulée dans la cycle précédent et, en conséquence, les cycles d'injection de pièces peuvent se succéder en continu. Il convient évidemment de réaliser le bras rotatif du robot de transfert de façon telle que le noyau fusible maintenu par sa pince n'entrave pas l'extraction, de l'unité de moulage par injection, de la pièce moulée au cycle précédent et ce, par la pince prévue à cet effet.

En outre, dans ce dispositif, le temps nécessité pour le cycle d'injection de la pièce peut être exploité par le robot de transfert pour assurer le transfert de la pièce moulée au cycle précédent vers le robot de fusion et l'extraction d'un nouveau noyau fusible de l'unité de moulage de noyaux fusibles.

Enfin, les opérations de fusion et de récupération du noyau fusible et de lavage de la pièce moulée sont contrôlées par le robot de fusion et peuvent donc se dérouler conjointement avec les opérations assurées par le robot de transfert.

En conséquence, il est possible, en programmant le fonctionnement des deux robots en fonction des temps nécessaires pour chaque opération, d'obtenir un cycle de fabrication pratiquement exempt de temps morts et donc d'atteindre un taux de productivité très élevé.

Selon un mode de réalisation particulier du dispositif conforme à l'invention qui peut se révéler très intéressant, le dispositif peut comporter, en outre, une unité de conditionnement des noyaux fusibles, le robot de transfert étant programmé, dans ce cas, pour venir déposer et abandonner dans l'unité de conditionnement chaque noyau fusible successif extrait de l'unité de moulage de noyaux fusibles et pour prendre, dans ladite unité, un noyau fusible conditionné et le transférer dans l'unité de moulage par injection.

Le recours à un dispositif de conditionnement des noyaux fusibles, qui peut être simplement constitué par un plateau rotatif à rotation séquencée, permet, en particulier, de réduire le temps de conditionnement du noyau fusible dans l'unité de moulage de noyaux fusibles et partant peut permettre un accroissement de productivité.

Il peut également se révéler avantageux d'équiper le dispositif conforme à l'invention d'une unité de stockage de pièces moulées, le robot de transfert pouvant être programmé de façon à abandonner, dans ladite unité, les pièces moulées successivement extraites de l'unité de moulage par injection et, éventuellement, pour reprendre ultérieurement ces pièces moulées et les transférer vers le robot de fusion.

Le recours à une telle unité de stockage qui peut être simplement constituée d'une table se révèle particulièrement utile dans le cas d'un arrêt momentané du robot de fusion ou des unités de fusion et de récupération des noyaux ou de lavage des pièces moulées.

Enfin, pour éviter tout engorgement accidentel du dispositif, il peut se révéler utile d'équiper celui-ci d'une bande transporteuse permettant l'évacuation et le stockage des noyaux fusibles et/ou des pièces moulées saisies successivement par le robot de transfert dans le cas où une ou plusieurs étapes du cycle de fabrication seraient interrompues, le robot de transfert assurant, dans ce cas, la dépose et l'abandon de ces pièces sur ladite bande transporteuse qui permet leur évacuation dans un lieu de stockage.

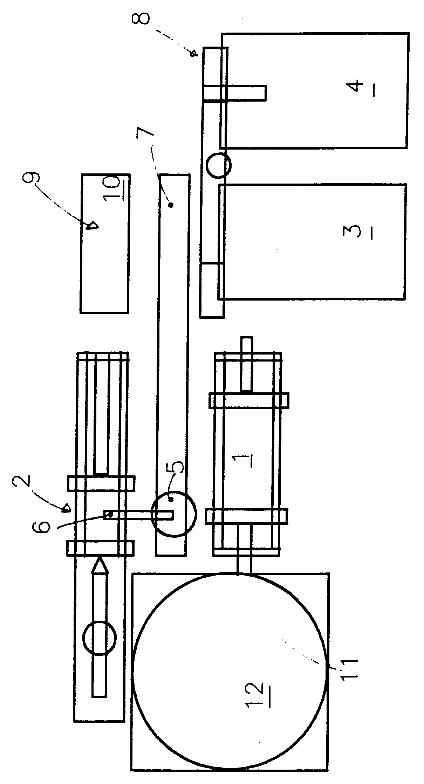

Le dispositif conforme à l'invention est, en outre, explicité plus en détail par la description d'un mode de réalisation pratique décrit ci-après et dans laquelle on se réfère à la figure unique du dessin annexé qui montre une vue schématique et en perspective d'un dispositif selon l'invention.

Ainsi qu'il apparaît sur la figure, le dispositif comporte une unité de moulage de noyaux fusibles (1) et une unité de moulage par injection (2) disposées en parallèle ainsi qu'une unité de fusion et de récupération des noyaux fusibles (3) et une unité de lavage des pièces moulées (4) disposées à une extrémité des unités de moulage de noyaux fusibles (1) et de moulage par injection (2).

Les différentes unités peuvent être du type classique, la demanderesse préférant toutefois utiliser, compte tenu de sa haute productivité, une unité de fusion et de récupération des noyaux fusibles telle que décrite dans la demande de brevet EP-A-0402990.

Le dispositif comporte, en outre, un robot de transfert (5) disposé entre les unités de moulage de noyaux fusibles (1) et de moulage par injection (2) et pouvant se déplacer parallèlement à ces unités sur des rails de guidage (7). Le robot de transfert (5) comporte un bras rotatif (6) équipé, à une extrémité, d'une pince (non représentée) adaptée pour saisir et maintenir un noyau fusible et, à son autre extrémité, d'une pince (également non représentée) adaptée pour saisir et maintenir une pièce moulée.

Le dispositif comporte encore un robot de fusion fixe (8) disposé entre les unités de moulage de noyaux fusibles (1) et de moulage par injection (2) et à proximité des unités de fusion et de récupération des noyaux fusibles (3) et de lavage des pièces moulées (4). Ce robot (8) est équipé d'une pince (non représentée) adaptée pour saisir et maintenir une pièce moulée présentée par la pince adéquate du robot de transfert (5).

Le dispositif comporte enfin une unité de stockage de pièces moulées (9) constituée par une table (10) et une unité de conditionnement des noyaux fusibles (11), constituée par un plateau rotatif (12), à rotation séquencée, disposé à proximité et en ligne avec l'unité de moulage de noyaux fusibles (1).

Le dispositif tel que décrit est programmé de façon à assurer automatiquement la séquence de fonctionnement, ci-après, lors d'un cyle de production d'une pièce moulée :
a) par l'intermédiaire de sa pince adéquate, le robot de transfert (5) extrait un noyau fusible de l'unité de moulage de noyaux fusibles (1) ;
b) le robot de transfert (5) dépose le noyau fusible sur le plateau (12) de l'unité de conditionnement (11) et, après un pas de rotation de ce plateau (12), saisit, par la même pince, un noyau fusible conditionné ;
c) le robot de transfert (5) se déplace vers l'unité de moulage par injection (2) qui termine un cycle de moulage et saisit, par la pince adéquate, la pièce moulée lors du cycle de moulage précédent et l'extrait du moule ouvert ;
d) par une rotation de son bras, le robot de transfert (5) positionne ensuite le noyau fusible conditionné dans le moule de l'unité de moulage par injection (2) et l'y abandonne ;
e) le robot de transfert (5) se déplace alors vers le robot de fusion (8) et tranfère dans sa pince la pièce moulée extraite du moule durant l'opération c ;
f) le robot de transfert (5) revient enfin à sa position de départ en vue de saisir et d'extraire le noyau fusible suivant produit dans l'unité de moulage de noyaux fusibles (1) et de recommencer un nouveau cycle ;
g) durant les opérations a), b), c) et d), le robot de fusion (8) assure, de son côté, l'introduction de la pièce précédemment moulée dans l'unité de fusion et de récupération du noyau fusible (3) puis l'introduction et l'abandon de cette pièce dans l'unité de lavage des pièces moulées (4) avant de revenir à sa position de départ pour recevoir la pièce moulée suivante transférée par le robot de transfert (5).

Chaque robot prend donc en charge deux opérations majeures d'un cycle de fabrication, le robot de transfert (5) desservant les unités de moulage de noyaux fusibles (1) et de moulage par injection (2) et le robot de fusion (8) desservant les unités de fusion et de récupération des noyaux fusibles (3) et de lavage des pièces moulées.

Dans le dispositif tel que décrit, il est possible de programmer le robot de transfert (5) de façon telle que, dans le cas d'un arrêt intempestif des opérations en rapport avec la fusion, la récupération des noyaux fusibles ou le lavage des pièces, ce robot de transfert (5) abandonne les pièces moulées sur la table de stockage (10) au lieu de les tranférer dans la pince du robot de fusion (8). Les pièce moulées stockées sur la table de stockage (10) peuvent alors être reprises ultérieurement par le robot de transfert (5), par exemple en fin de fabrication, et être transférées successivement dans la pince du robot de fusion (8) en vue de leur traitement dans les unités de fusion et de récupération des noyaux fusibles (3) et de lavage des pièces moulées (4).

Dans le dispositif tel que décrit, il est possible de programmer dans le temps les fonctions successives accomplies normalement par les deux robots de façon telle que les cycles de moulage de noyaux fusibles et de moulage par injection des pièces souhaitées soient réalisés en parallèle avec un minimum de temps morts et sans perturbation.

## Revendications

1. Dispositif de moulage par injection de pièces en matière plastique par la technique des noyaux fusibles comprenant (a) une unité de moulage de noyaux fusibles (1) et (b) une unité de moulage par injection des pièces (2) disposées en parallèle ainsi que (c) une unité de fusion et de récupération des noyaux fusibles des pièces moulées (3) et (d) une unité de lavage des pièces moulées (4) disposées à une extrémité des unités de moulage de noyaux fusibles (1) et de moulage par injection des pièces (2), caractérisé en ce qu'il est équipé d'une part d'un robot de tranfert (5) mobile disposé entre les unités de moulage de noyaux fusibles (1) et de moulage par injection des pièces (2), ledit robot de tranfert étant équipé d'un bras rotatif (6) comportant, à une extrémité, une pince adaptée pour saisir et maintenir un noyau fusible moulé et, à l'autre extrémité, une pince adaptée pour saisir et maintenir une pièce moulée, d'autre part d'un robot de fusion fixe (8) disposé entre les unités de moulage de noyaux fusibles (1) et de moulage par injection (2) et à proximité des unités de fusion et de récupération des noyaux fusibles (3) et de lavage des pièces moulées (4), ledit robot de fusion (8) étant équipé d'une pince adaptée pour saisir et maintenir une pièce moulée, les robots de transfert (5) et de fusion (8) étant programmés de façon telle que, lors du déroulement d'une séquence de moulage, le robot de transfert (5) assure successivement la prise et l'extraction du noyau fusible moulé dans l'unité de moulage de noyaux fusibles (1) par l'intermédiaire de la première pince adaptée, la prise et l'extraction d'une pièce moulée dans l'unité de moulage par injection (2) par l'intermédiaire de la seconde pince adaptée, le placement, par une rotation de son bras, du noyau fusible dans l'unité de moulage par injection (2) et le transfert de la pièce moulée vers le robot de fusion (8) qui assure ensuite l'introduction de la pièce moulée dans l'unité de fusion et de récupération des noyaux fusibles (3) puis l'abandon de cette pièce dans l'unité de lavage (4).

2. Dispositif de moulage par injection selon la revendication 1 caractérisé en ce qu'il comporte, en outre, une unité de conditionnement des noyaux fusibles (11), le robot de transfert (5) étant programmé, dans ce cas, pour venir déposer et abandonner dans l'unité de conditionnement (11) chaque noyau fusible successif extrait de l'unité de moulage de noyaux fusibles (1) et pour prendre, dans ladite unité, un noyau fusible conditionné et le transférer dans l'unité de moulage par injection (2).

3. Dispositif de moulage par injection selon la revendication 1 ou 2 caractérisé en ce qu'il comporte, en outre, une unité de stockage de pièces moulées (9), le robot de transfert (5) pouvant être programmé de façon à abandonner, dans ladite unité, les pièces moulées successivement extraites de l'unité de moulage par injection (2) et, éventuellement, pour reprendre ultérieurement ces pièces moulées et les transférer vers le robot de fusion (8).

4. Dispositif de moulage par injection selon l'une quelconque des revendications 1 à 3 caractérisé en ce qu'il comporte, en outre, une bande transporteuse permettant l'évacuation et le stockage des noyaux fusibles et/ou des pièces moulées saisies successivement par le robot de transfert (5) dans le cas où une ou plusieurs étapes du cycle de fabrication seraient interrompues, le robot de transfert (5) assurant dans ce cas la dépose et l'abandon de ces pièces sur ladite bande transporteuse qui permet leur évacuation dans un lieu de stockage.

## Claims

1. Device for injection moulding plastic parts by the fusible core technique, comprising (a) a unit for moulding fusible cores (1) and (b) a unit for injection moulding parts (2) disposed in parallel together with (c) a unit for melting and recovering the fusible cores from the moulded parts (3) and (d) a unit for washing the moulded parts (4) disposed at one end of the units for moulding fusible cores (1) and for injection moulding the parts (2), characterised in that it is equipped on the one hand with
a mobile transfer robot (5) disposed between the units for moulding fusible cores (1) and for injection moulding the parts (2), the said transfer robot being equipped with a rotatable arm (6) comprising, at one end, a gripper adapted in order to catch and to keep hold of a moulded fusible core and, at the other end,
a gripper adapted in order to catch and to keep hold of a moulded part, on the other hand,
a stationary robot for melting (8) disposed between the units for moulding fusible cores (1) and for injection moulding (2) and in the vicinity of units for melting and recovering the fusible cores (3) and for washing the moulded parts (4), said robot for melting being equipped with a gripper adapted in order to catch and keep hold of a moulded part,
the transfer robot (5) and the robot for melting (8) being programmed in such a way that during the execution of a moulding sequence, the transfer robot (5) successively takes hold of and extracts the fusible core moulded in the unit for moulding fusible cores (1) by the agency of the first adapted gripper, takes hold of and extracts a part moulded in the unit for injection moulding (2) by the agency of the second adapted gripper, places, by a rotation of its arm, the fusible core into the unit for injection moulding (2) and transfers the moulded part to the robot for melting (8) which subsequently inserts the moulded part into the unit for melting and for recovering the fusible cores (3) and then leaves this part in the washing unit (4).

2. Device for injection moulding according to Claim 1, characterised in that it furthermore comprises a unit for conditioning the fusible cores (11), the transfer robot (5) being programmed, in this case, in order to deposit and to leave in the conditioning unit (11) each successive fusible core extracted from the unit for moulding fusible cores (1) and in order to take hold of, in the said unit, a conditioned fusible core and to transfer it into the unit for injection moulding (2).

3. Device for injection moulding according to Claims 1 or 2, characterised in that it furthermore comprises a unit for storing moulded parts (9), it being possible to program the transfer robot (5) in such a way as to leave, in the said unit, the successively moulded parts extracted from the unit for injection moulding (2) and, where appropriate, subsequently to take up these moulded parts again and to transfer them towards the robot for melting (8).

4. Device for injection moulding according to any one of Claims 1 to 3, characterised in that furthermore comprises a belt conveyor which enables it to remove and store the fusible cores and/or the moulded parts caught successively by the transfer robot (5) in the case when one or more steps or the manufacturing this case, depositing and leaving these parts on the cycle would be interrupted, the transfer robot (5), in said belt conveyor which enables them to be removed to a storage location.

## Patentansprüche

1. Vorrichtung zum Spritzgießen von Kunststoffteilen mittels Ausschmelzkerntechnik, umfassend (a) eine Formgebungseinheit (1) für Ausschmelzkerne und (b) eine Spritzgießeinheit (2) für die Teile, die parallel zueinander angeordnet sind, sowie (c) eine Einheit (3) zum Ausschmelzen und Rückgewinnen der Ausschmelzkerne aus den geformten Teilen und (d) eine Wascheinheit (4) für die geformten Teile, die an einem Ende der Formgebungseinheit (1) für Ausschmelzkerne und der Spritzgießeinheit (2) für die Teile angeordnet sind, dadurch gekennzeichnet, daß sie einerseits mit einem beweglichen Transportroboter (5) ausgestattet ist, der zwischen der Formgebungseinheit (1) für Ausschmelzkerne und der Spritzgießeinheit (2) für die Teile angeordnet ist, wobei der besagte Transportroboter mit einem Dreharm (6) versehen ist, welcher an einem Ende eine zum Ergreifen und Festhalten eines geformten Ausschmelzkerns angepaßte Greifvorrichtung und am anderen Ende eine zum Ergreifen und Festhalten eines geformten Teils angepaßte Greifvorrichtung umfaßt, und andererseits mit einem ortsfesten Schmelzroboter (8), der zwischen der Formgebungseinheit (1) für Ausschmelzkerne und der Spritzgießeinheit (2) sowie in der Nähe der Einheit (3) zum Ausschmelzen und Rückgewinnen der Ausschmelzkerne und der Wascheinheit (4) für die geformten Teile angeordnet ist, wobei der besagte Schmelzroboter (8) mit einer zum Ergreifen und Festhalten eines geformten Teils angepaßten Greifvorrichtung versehen ist, wobei der Transportroboter (5) und der Schmelzroboter (8) derart programmiert sind, daß beim Ablauf einer Formgebungsfolge der Transportroboter (5) nacheinander das Ergreifen und die Entnahme des in der Formgebungseinheit (1) für Ausschmelzkerne geformten Ausschmelzkerns mit Hilfe des ersten angepaßten Greifwerkzeugs, das Ergreifen und die Entnahme eines in der Spritzgießeinheit (2) geformten Teils mit Hilfe des zweiten angepaßten Greifwerkzeugs, sowie durch eine Drehung seines Arms das Plazieren des Ausschmelzkerns in der Spritzgießeinheit (2) und den Transport des geformten Teils zum Schmelzroboter (8) sicherstellt, welcher sodann die Zufuhr des geformten Teils in die Einheit (3) zum Ausschmelzen und Rückgewinnen der Ausschmelzkerne und dann das Zurücklassen dieses Teils in der Wascheinheit (4) sicherstellt.

2. Spritzgießvorrichtung nach Anspruch 1, dadurch gekennzeichnet, daß sie außerdem eine Konditionierungseinheit (11) für die Ausschmelzkerne umfaßt, wobei der Transportroboter (5) in diesem Fall programmiert ist, um jeden aus der Formgebungseinheit (1) für Ausschmelzkerne entnommenen aufeinanderfolgenden Ausschmelzkern in der Konditionierungseinheit (11) abzusetzen und zurückzulassen, und um in der besagten Einheit einen konditionierten Ausschmelzkern aufzunehmen und ihn in die Spritzgießeinheit (2) zu überführen.

3. Spritzgießvorrichtung nach Anspruch 1 oder 2, dadurch gekennzeichnet, daß sie außerdem eine Speichereinheit (9) für geformte Teile umfaßt, wobei der Transportroboter (5) derart programmiert sein kann, daß er die nacheinander aus der Spritzgießeinheit (2) entnommenen geformten Teile in der besagten Einheit zurückläßt, und gegebenenfalls, um diese geformten Teile später wiederaufzunehmen und sie zum Schmelzroboter (8) zu überführen.

4. Spritzgießvorrichtung nach einem beliebigen der Ansprüche 1 bis 3, dadurch gekennzeichnet, daß sie außerdem ein Förderband umfaßt, welches für den Fall, daß ein oder mehrere Schritte des Fertigungszyklus unterbrochen würden, das Austragen und die Speicherung der Ausschmelzkerne und/oder der geformten Teile gestattet, die nacheinander vom Transportroboter (5) ergriffen werden, wobei der Transportroboter (5) in diesem Fall das Absetzen und Zurücklassen dieser Teile auf dem besagten Förderband sicherstellt, welches ihren Austrag an einen Speicherplatz gestattet.
